Europäisches Patentamt

(19) European Patent Office

Office européen des brevets

(11) Publication number: **0 100 757**
**B1**

# (12) EUROPEAN PATENT SPECIFICATION

(45) Date of publication of patent specification: **23.12.87**          (51) Int. Cl.⁴: **H 02 P 9/10** // H02P9/30

(21) Application number: **83830160.4**

(22) Date of filing: **01.08.83**

(54) Method and an apparatus for controlling A.C. rotating machinery power plants.

(30) Priority: **03.08.82 IT 2272382**

(43) Date of publication of application:
**15.02.84 Bulletin 84/07**

(45) Publication of the grant of the patent:
**23.12.87 Bulletin 87/52**

(84) Designated Contracting States:
**AT CH DE FR GB LI NL SE**

(56) References cited:
**CH-A- 514 953**
**DE-B-1 144 377**
**GB-A-1 033 303**
**US-A-3 164 769**
**US-A-3 936 722**

(73) Proprietor: **Checchetti, Maurizio**
**Piazza Sicilia 1**
**Milano (IT)**

(72) Inventor: **Checchetti, Maurizio**
**Piazza Sicilia 1**
**Milano (IT)**

(74) Representative: **Adorno, Silvano et al**
**c/o SOCIETA' ITALIANA BREVETTI S.p.A. Via**
**Carducci, 8**
**I-20123 Milano (IT)**

Courier Press, Leamington Spa, England.

### Description

This invention relates to a method and an apparatus for controlling electric power stations wherein each generator is separately phase locked controlled. The control of power plants of the thermal, hydroelectric, etc. type is presently carried out by using as a main control quantity the input power in a generally analogic manner, as well as other parameters that nevertheless require rather complex algorithms. Power adjustment must therefore be quick, feasible in a wide range of operating conditions, effective and reliable, considering that several energy conversions and high power values are involved. The relevant apparatuses are therefore rather expensive and attempt to reconcile opposite requirements.

For example an analogic field excitation control system of this type is disclosed in US—A—3 936 722, which actually controls the power factor only or, in other words, the exchange of reactive power in response to the summing signal of a rotor angle detector means and of a rotor angle setting means.

The object of the present invention is a main control method and apparatus, prevailingly digital, according to the precharacterizing portions of claims 1 and 4, and, respectively, for directly operating on the generator and by electric signals only for the main control in the short run, so that the secondary adjustment of the input power becomes easier and more effective, by means of a substantially digital control.

Another object of the present invention is a phase-follower control apparatus and method for electric power plants suitable to give an energy balance control wherein a difference between the input mechanical power and the electric power output is balanced through a variation of the kinetic energy (i.e. mechanical speed and angular phase).

The invention consists of a method and the relevant apparatus carrying out a regulator of the locking type (phase locking, voltage locking, etc.) having features resembling those of a torque converter automatic change gear: having fixed the input power, if the load increases, the voltage decreases with an increase of the supplied current. This way any change, e.g. a line voltage variation, provided that it is within predetermined limits, is automatically tracked and corrected very quickly, independently from the input power magnitude. Although the input power can be subjected to changes, the reference frequency is maintained rigorously constant with very small phase variations.

In power plants wherein the size is relatively small with respect to the overall line power, the motor power can be fixed and adjusted for the better efficiency or for the maximum power without any specific feedback loop, or it can be reasonably variable for hydroelectric stations, or even be moderately unstable, and in all these cases the input power control is compulsorily limited to the alarm signaling since the instrumentation and the plant apparatuses is limited to the minimum required for the plant start and stop. In larger plants, the input power can be slowly proportioned, or programmed, the only aim being to approximately balance (match) the load avoiding expensive and not very effective control systems. Thereby it is possible to prevent power excesses in standby conditions, to reduce the thermal stresses and to obtain a maximum of temperature and efficiency. Another advantage of the invention resides in eliminating the analogical parameters from the feedback loop: the only references parameters are the time and a mechanical angle, both adapted to be digitized with high resolution and substantially stable, the analogic part is limited to the regulator output, with very few components the performances of which must not be outstanding.

In equilibrium conditions the input mechanical power equals to the supplied electric power that is given by the product of the RMS voltage and the supplied current. The current value only depends upon the line impedance between the generator and the first network junction (in case even upon the load and the corresponding difference of potential). In the short run, disregarding the motor characteristics that for small variations can be considered as supplying a constant torque, the kinetic rotation energy compensate the difference between the motor power and the electric power by taking up or giving out. The variations of the kinetic energy consist of variation of the speed of rotation that can be detected as time differences between a reference pulse and the one of an encoder carried by the generator-motor shaft. These time differences, quite closely or even proportionally subdivisible, allow, according to the invention, a fully electronic control of the generator magnetic field, quickly modifying and adequating it to the necessity, so as to prevent substantial faults.

In case the motor slows down, the input power is smaller than the delivered one and in order to balance again the system it is only required to decrease the generator magnetic field thus reducing the output voltage, the line potential difference and the output current. The field variation can be proportional to the phase offset between the reference and encoder pulses. To avoid false signals and too high response frequencies it is preferred to provide for a graduated means such as a ramp and the hysteresis thereby allowing for a certain degree of out of phase. To obtain better time responses it is possible to resort to non linear transfer functions, e.g. stored in a properly programmable memory, the integration of a few successive phase shift conditions, etc.

The method of the present invention is characterized by a command signal being provided by integrating an intermediate signal whose sign and amplitude depend on the sign and the amplitude of the phase shift between the pulses of each sequence.

According to a preferred feature of this method the magnetic field varies according to said command signal, which could be temporarily damped, and said intermediate signal varies proportionally to said phase shift.

The apparatus of the present invention, of the type defined in the precharacterizing portion of claim 4, is characterized by a process means comprising a generator of an intermediate signal whose sign and amplitude are controllable as function of the relative phase shift between said pulses, and by an integrating capacitor connected to the output of the generator of the intermediate signal and providing the command signal.

The invention will now be disclosed with reference to some preferred embodiments, together with the attached drawings in which:

Figure 1 schematically shows an apparatus according to the invention;

Figures 2, 4 and 5 show some embodiments of the control apparatus according to the invention; and

Figure 3 shows some diagrams explaining the method of the invention.

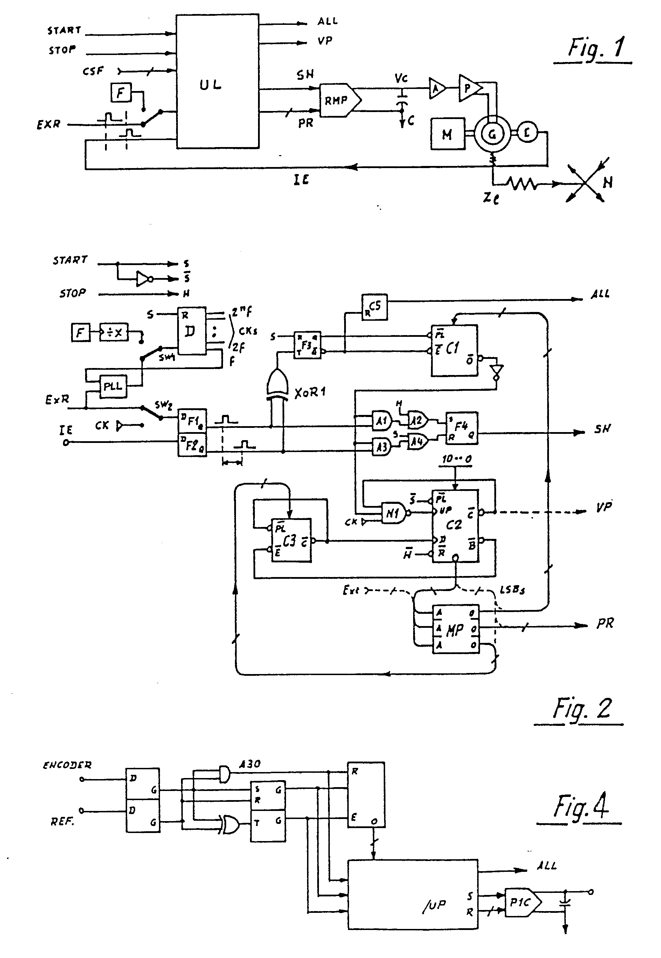

Fig. 1 is a general block diagram showing a motor M coupled to a generator G feeding a distribution network schematically represented by impedance $Z_I$ accounting for the impedance between the generator and the first network junction N. An encoder E is mounted coaxially with the generator G and motor M, generating pulses $I_E$ that are applied to one input of a logic unit UL. This latter controls a ramp generator RMP charging a capacitor C to a voltage that, in turn, controls the induction or magnetic field value of the generator by means of a preamplifier A and a power amplifier P.

The logic unit UL furthermore receives reference pulses EXR and an offset control signal CSF (formed by a number of bits), as well as start and stop signals each formed by a single bit.

Among the logic unit UL outputs there are provided an alarm output ALL signalling the maximum phase displacement and an output Vp signalling that the input power is likely to be varied.

The block RMP is a double ramp generator including a digital analogic converter and its output direct current charges or discharges a capacitor C that integrates the charge in the time so as to reach an instant voltage Vc depending from the previous value, from the ramp sign (ascending or descending) and from the slope value, that is controlled by the digital value at the input of the ramp generator.

The inputs of the ramp generator are, respectively SN, formed by one bit determining the ramp sign, and PR, formed by more bits, determining the slope of the ramp itself.

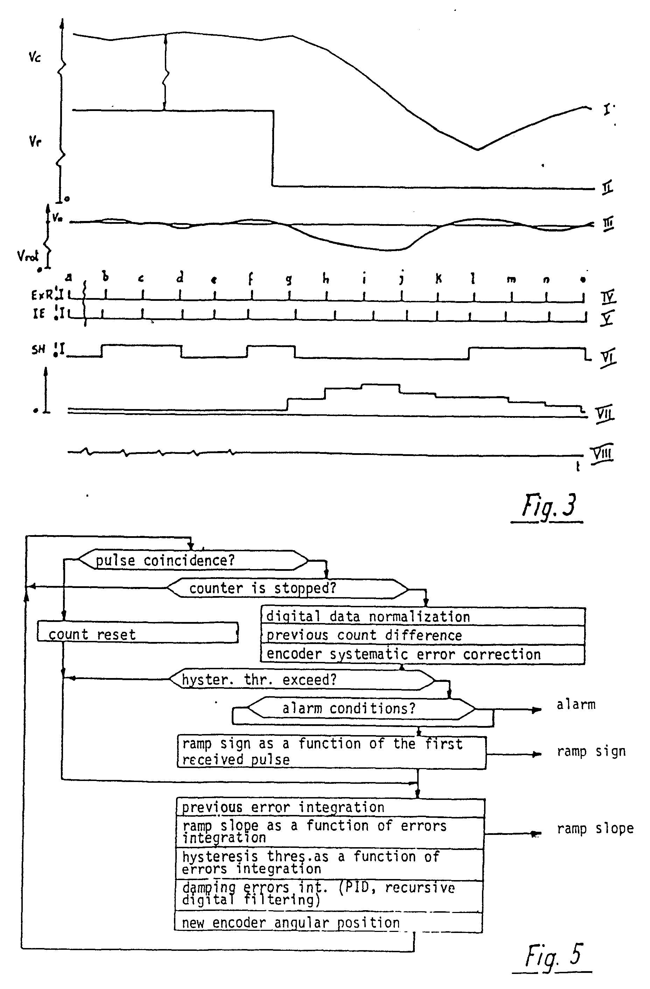

For an easier understanding of the operation of the apparatus according to the invention, reference will be made to the diagrams of Fig. 3 that show, schematically and not in scales, some waveforms relating to the regulation of a situation of increased load. The diagrams are interrupted along the time axis in order to make the comparison easier.

Waveforms from I to VIII respectively illustrate the voltage Vc across capacitor C (substantially equal to the voltage of generator G), the line voltage Vr, the rotation speed Vrot of the generator, the reference pulses EXC, the pulses from encoder IE, the value of bit SN, the (analogic) value of the ramp slope, and finally the profile of the out of phase tolerance and damping. When the line voltage Vr, the reference frequency and the input power are balanced, the speed of rotation only shows modest oscillations at the time corresponding to reference pulse a, the pulse from the encoder precisely coincides with the IE pulse or are anyhow within the admitted limits of phase shift; the ramp sign and slope are not modified and voltage Vc keeps on slightly and gradually decreasing at the minimum slope. After a number of reference pulses (not shown) the speed has increased since the electric power is lower than the mechanical input power.

The difference between the input mechanical power and the electric power supplied to the load has been turned into an additional kinetic energy of the rotating mass thereby causing the speed to increase. As a consequence of such (modest) speed increase, at a certain moment, the pulse from the encoder is leading the reference one beyond the admitted limit shown at b and therefore the ramp sign is changed whereas the slope is kept constant at the minimum value. Voltage Vc, (as well as the generated voltage Vg) again starts to rise. While the current increases, the speed gradually decreases and, at time c, speed and phase are almost exactly coincident so that the encoder and reference pulses coincide. The sign and the slope of the ramp stay unchanged so that the voltage across the capacitor (and thereby the induction and the generated voltage) the current and the supplied power continue to slowly rise. At time d the speed of rotation has decreased since the kinetic energy compensated the gap between the input and output powers. The encoder pulse lags the reference one beyond the admitted limit, the ramp sign changes and so on.

In Fig. 3, between the adjacent reference pulses f and g the line voltage step dropped thereby causing a substantial increase of the potential different between the generated voltage Vg and the line voltage Vr. Consequently the current and power supplied have been increased thereby causing a large gap with respect to the input power and the difference is turned into kinetic energy slowing down the speed of rotation. The encoder pulse then appreciably lags behind the reference pulse g thereby causing the sign change of the ramp and a slope increase that is proportional to the delay between the two pulses. It is to be understood that the scales are not proportional and as an example the time windows between the pulses are in the order of a few microseconds, i.e. of several orders of magnitude smaller than the line period and the time interval between adjacent pulses of the encoder.

At pulses h and i the speed continues decreasing and the slope is further increased. At pulse *h* the speed is still low, but meanwhile the energy balance has reversed; the mechanical angle is still out of phase but the tolerance with respect to the phase shift has increased so that the delay is smaller and the ramp slope decreased. At pulse *k* the speed has risen, the encoder pulse leads and the ramp is inverted and gradually the damp reduces the oscillation amplitudes to the normal values.

In Fig. 2 there is illustrated a preferred but not limiting embodiment of the logic unit UL according to the invention. More particularly such unit comprises a cabled circuit of standard C-MOS integrated circuits. The start and stop inputs generate the inner signals S, H and their inverted $\bar{S}$, $\bar{H}$ in a known manner. A reference frequency generator F is connected to the input of a programmable X scaler counter to obtain harmonics of the usual line frequencies. When switch SW1 is in the inner reference condition, a second scaler D generates a complete series of harmonics, all powers of 2 of the line frequency and among them the clock pulses CK of the subsequent counters. EXR and IE pulses are synchronized by two bistable F1 and F2 of D type. The first one of the two pulses changes the state of flip-flop F3 through exclusive OR XOR1 thus enabling the counting input E of programmable counter C1 receiving count pulses on another input (not shown). The second coming pulse resets the bistable F3 stopping the counting of C1. In case the two pulses are simultaneous the exclusive OR does not alter the state of bistable F3 thanks to its known characteristics. Counter C1 is previously adjusted at the phase shift tolerance admissible at that moment, i.e. a predetermined number of pulses, so that in case the count is not stopped before reaching such preset value, then output $\bar{O}$ becomes activated. Therefore, in case the second pulse is not received within the time window defined by this number of preset pulses, the output $\bar{O}$ is activated and the second pulse, through and logic gate A1, A2, A3, A4, reaches latch bistable F4 which in turn changes or does not change its state and therefore the ramp sign according to its previous state. In fact bistable F4 is of SR type and therefore, upon receiving a pulse at input S through gates A1 and A2, its output Q assumes a high logic value (1) whereas this same output becomes low (0) when the input comes from gates A3 and A4. The output of such bistable is therefore the sign bit SN of the ramp shown in Fig. 1. In case the phase shift still persists in the same direction, in spite of the slope and sign changes, bistable F4 does not change the sign. A counter C5 is provided in parallel to counter C1 and its counting continues until the arrival of the second pulse and can possibly reach one or more configurations of phase shift alarm generating ALL signal.

The output of counter C1 is further connected via a NAND gate N1 to an up-down counter C2 which, during the presetting, parallely loads an intermediate fixed value, such as 100...0.

Counter C2 further provides an input $\bar{R}$ resetting the output during the stop procedure, two clock inputs (CK up and CK down) and the carry $\bar{C}$ and borrow $\bar{B}$ outputs used as a feedback on the inputs to prevent count saturation (overflow). Each time counter C1 detects an excess of phase shift, gate N1 transfers a number of CK pulses proportional to the phase shift to input D. A third counter C3 loads in a continuous manner counter C2 with a frequency depending upon the damp speed. Counter C2 integrates the phase shift amplitude and this value is damped from counter C3. Under normal conditions the counting from C2 will be near to zero, whereas after number of neighbouring transients or a high step the counting will be maximum. The outputs from counter C2 are led to inputs A of a programmable memory MP of the ROM, EPROM, etc. type, in case together with other externally controlled bits to obtain particular characteristics. Outputs O from memory MP, that can be integrated by the lower weight bits of counter C2 to save programming time, constitute the tolerance of the phase shift that is valid at that moment for counter C1, the ramp slope for ramp generator RMP and the damp speed for divider counter C3. The use of a programmable memory MP allows for an optimization of each parameter and the application of particular controlling modalities that can be possibly be selected (programmed) from outside.

At the start the network computer selects the optimum values for the input power, induction and phase shift. Since all the time constants are known, when the speed of rotation and the phase are next to the optimum a start signal is produced that selects the ramp sign and parallely loads counter C2 with a fixed initial value. The output from this counter, through memory MP, is led to the ramp generator RMP which supplies a predetermined current to charge the integrating capacitor for a time selected by the computer. Upon reaching a voltage corresponding to the desired initial induction, the generator G is connected, at the desired moment, to the line and the double ramp operations begin.

Figures 4 and 5 show an embodiment of the method by means of a microprocessor. Fig. 4 shows a block diagram whereas Fig. 5 shows a flow chart illustrating the working, respectively. The phase and/or the speed measurements, as a function of the mechanical angle, can be directly obtained by counting the number of encoder marks passing through the reference time windows, but this method requires expensive encoders. As an alternative an undirect measurement can be obtained by counting the clock pulses, within windows controlled by an encoder pulse and an outer reference. This solution that is cheaper will now be illustrated. To obtain a good resolution with the today components, it is better that the counter is separated from the microprocessor, or anyhow is a dedicated counter. In Fig. 4 there is illustrated a possible solution with an outer counter for the particular case of centered phase, with reference

Abhängigkeit von der Phasenverschiebung zwischen diesen Impulsen;

—Verwendung des Signals ($V_c$) zum Steuern der rotormagnetischen Induktion,

dadurch gekennzeichnet, daß das Signal ($V_c$) durch Integrieren eines Zwischensignals, dessen Vorzeichen (SN) und Amplitude (PR) vom Vorzeichen und von der Amplitude der Phasenverschiebung zwischen den Impulsen jeder Sequenz abhängig sind, bereitgestellt wird.

2. Verfahren nach Anspruch 1, worin das magnetische Feld entsprechend dem Befehlssignal ($V_c$) variiert und das Zwischensignal (SN, PR) proportional zur Phasenverschiebung variiert.

3. Verfahren nach Anspruch 2, worin das Befehlssignal ($V_c$) temporär gedämpft wird.

4. Vorrichtung zum Steuern einer Wechselstromdrehmaschine (G) des Typs mit gewickeltem Rotor und einem variablen magnetischen Feld zur Versorgung elektrischer Versorgungsnetze, beinhaltend ein oder mehrere Generator-Motorpaare, wobei die Maschine PLL-gesteuert ist, umfassend:

—einen Referenzimpulsgenerator (EXR) mit einer Frequenz und einer zu verfolgenden Phase;

—ein impulsgenerierendes Kodierwerk (E), das auf der mechanischen Achse des Motor-Generators montiert ist;

—ein Vergleich und Verarbeitungsmittel (UL, RMP, C), das als Eingänge die Referenzimpulse (EXR) und Kodierimpulse ($I_E$) empfängt und ein Ausgangsbefehlssignal ($V_c$) liefert;

—einen an den Ausgang des Verarbeitungsmittels gekoppelten Verstärker, der die magnetische Induktion der Wechselstrommaschine moduliert,

dadurch gekennzeichnet, daß das Verarbeitungsmittel folgendes umfaßt:

—einen Generator eines Zwischensignals, dessen Vorzeichen (SN) und Amplitude (PR) als Funktion der relativen Phasenverschiebung zwischen den Impulsen steuerbar sind;

—einen Integrierkondensator (C), der mit dem Ausgang des Generators des Zwischensignals (SN, PR) verbunden ist und das Befehlssignal ($V_c$) liefert.

**Revendications**

1. Procédé pour commander des stations génératrices d'énergie électrique équipées de machines tournantes en courant alternatif (G), pour des réseau électriques incluant une ou plusieurs paires de générateur-moteur, chaque générateur (G) étant commandé séparément dans le mode à verrouillage de phase, consistant à:

—engendrer un train d'impulsions ($I_E$) dont la phase est fonction de la phase de l'arbre de générateur (G) et de la valeur à régler;

—engendrer un train d'impulsions de référence (EXR);

—détecter le déphasage entre les impulsions correspondantes de chaque train;

—engendrer un signal de commande ($V_c$) fonction du déphasage entre les impulsions;

—utiliser le signal ($V_c$) pour régler l'induction magnétique de rotor,

caractérisé en ce que ledit signal ($V_c$) est fourni en intégrant un signal intermédiaire dont le signal (SN) et l'amplitude (PR) sont des fonctions du signe et de l'amplitude du déphasage entre les impulsions de chaque train.

2. Procédé selon la revendication 1, dans lequel le champ magnétique varie selon le signal de commande ($V_c$) et le signal intermédiaire (SN, PR) varie proportionnellement au déphasage.

3. Procédé selon la revendication 2, dans lequel le signal de commande ($V_c$) est amorti temporairement.

4. Dispositif pour commander une machine tournante en courant alternatif (G) du type comportant un rotor bobiné et un champ magnétique variable pour alimenter des réseaux électriques incluant une ou plusieurs paires de générateur-moteur, la machine étant commandée dans une boucle à verrouillage de phase comprenant:

—un générateur d'impulsions de référence (EXR) ayant une fréquence et une phase à suivre;

—un codeur de génération d'impulsions (E) monté sur l'axe mécanique du moteur-générateur;

—un moyen de comparaison et de traitement (UL, RMP, C) recevant à ses entrées l'impulsion de référence (EXR) et les impulsions de codeur ($I_E$) et fournissant un signal de commande de sortie ($V_c$);

—un amplificateur couplé à la sortie du moyen de traitement, modulant l'induction magnétique de la machine à courant alternatif,

caractérisé en ce que le moyen de traitement comprend:

—un générateur d'un signal intermédiaire dont le signe (SN) et l'amplitude (PR) sont réglables en fonction du déphasage relatif entre les impulsions;

—un condensateur d'intégration (C) connecté à la sortie du générateur du signal intermédiare (SN, PR) et fournissant le signal de commande ($V_c$).

and encoder pulses that are simultaneous. The first arriving pulse, either from the encoder or from the outer reference, through the SR latch circuit brings about the up-down counting and through the EX OR and TFF enables the counter. The second pulse received by TFF disables the counting. To improve the statistical accuracy it is possible to use the repetitive characteristics of the encoder and the binary counter, storing a number of subsequent counts, reducing the temporal quantization uncertainty (after many revolutions the errors statistically compensate each other). In this case the counter is reset by the AND gate at the coincidence of two pulses, thus eliminating every counting error.

Beyond the parallel inputs from the counter output, microprocessor µP also receives other signals on single lines and more precisely: the output from SR indicating which one of the signals arrived first, thus saving processing time for the ramp sign; the output from AND A30, state of the counter or pulses coincidence; the output from TFF for the data check.

In case the pulses do not coincide when the counting has stabilized, the normalizing is accomplished by complementing and in case noting the count value. As an example 111100 becomes 000011. The previously stored value is subtracted from the new one to obtain the phase shift. Each angular position of the encoder, due to mounting asymmetries or geometrical inaccuracies, exhibits systematic errors that are reduced by means of corrective factors stored for each angular position.

In case the phase shift exceeds the hysteresis threshold admitted at that moment, after checking the alarm conditions the ramp sign is determined as a function of the first received pulse; the absolute value of the phase error is integrated to the preceding damped value. The ramp slope is a function of the previous errors integration, a value that can be a linear value or not, stored in a ROM, a mathematical function and/or a specific value that in case is controlled from outside too. The same holds true for the hysteresis threshold. The damping of the error integration controlling the preceding parameters, the hysteresis and the slope, can be controlled through several algorithms according to the plant characteristics, such as PID, the digital recursive filtering, etc.

Whereas the invention has been particularly illustrated for adjusting the values of the supplied voltage, the same is not limited to this embodiment but can be employed for controlling other quantities too.

## Claims

1. A method for controlling electric power stations equipped with a.c. rotating machines (G), for electric networks including one or more pairs generator-motor, each generator (G) being individually controlled in the phase locking mode, comprising the steps of:
—generating a pulse sequence ($I_E$) whose phase is related to the phase of the generator (G) shaft and to the value to be controlled;
—generating a reference pulse sequence (EXR);
—detecting the phsae shift between corresponding pulses of each sequence;
—generating a command signal ($V_c$) dependent on the phase shift between said pulses;
—using said signal ($V_c$) to control the rotor magnetic induction
characterized in that said signal ($V_c$) is provided by integrating an intermediate signal whose sign (SN) and amplitude (PR) depend on the sign and the amplitude of the phase shift between the pulses of each sequence.

2. A method as claimed in claim 1, wherein the magnetic field varies according to said command signal ($V_c$) and said intermediate signal (SN, PR) varies proportionally to said phase shift.

3. A method as claimed in claim 2, wherein said command signal ($V_c$) is temporarily damped.

4. An apparatus for controlling an a.c. rotating machine (G) of the type having a wound rotor and a variable magnetic field for supplying electric networks including one or more generator-motor pairs, the machine being controlled in a phase locked loop comprising:
—a reference pulse generator (EXR) having a frequency and a phase to be tracked;
—a pulse generating encoder (E) mounted on the mechanical axis of the motor-generator;
—a comparison and processing means (UL, RMP, C) receiving as inputs said reference pulse (EXR) and encoder pulses ($I_E$) and providing an output command signal ($V_c$);
—an amplifier coupled to the output of the processing means modulating the magnetic induction of the a.c. machine.
characterized in that the processing means comprises:
—a generator of an intermediate signal whose sign (SN) and amplitude (PR) are controllable as function of the relative phase shift between said pulses;
—an integrating capacitor (C) connected to the output of the generator of the intermediate signal (SN, PR) and providing the command signal ($V_c$).

## Patentansprüche

1. Verfahren zum Steuern von elektrischen Kraftwerksanlagen, die mit Wechselstromdrehmaschinen (G) ausgestattet sind, für elektrische Versorgungsnetze, beinhaltend ein oder mehrere Generator-Motorpaare, wobei jeder Generator (G) auf Phasenverriegelungsart individuell gesteuert wird, umfassend die folgenden Schritte:
—Generierung einer Impulssequenz ($I_E$), deren Phase mit der Phase de Welle des Generators (G) und mit dem zu kontrollierenden Wert in Relation steht;
—Generierung einer Referenzimpulssequenz (EXR);
—Erfassing der Phasenverschiebung zwischen entsprechenden Impulsen jeder Sequenz;
—Generierung eines Befehlssignals ($V_c$) in

*Fig. 1*

*Fig. 2*

*Fig. 4*

1

$V_c$

$V_r$

$V_e$

$V_{rot}$

a  b  c  d  e  f  g  h  i  j  K  l  m  n

ExR  I

IE  I

SH  I

I
II
III
IV
V
VI
VII
VIII

t

*Fig. 3*

pulse coincidence?

counter is stopped?

count reset

digital data normalization
previous count difference
encoder systematic error correction

hyster. thr. exceed?

alarm conditions? → alarm

ramp sign as a function of the first
received pulse → ramp sign

previous error integration
ramp slope as a function of errors
integration
hysteresis thres. as a function of
errors integration
damping errors int. (PID, recursive
digital filtering)
new encoder angular position

→ ramp slope

*Fig. 5*